Europäisches Patentamt

(19) European Patent Office

Office européen des brevets

(11) Publication number: **0 056 662**
**B1**

(12) **EUROPEAN PATENT SPECIFICATION**

(45) Date of publication of patent specification: **19.06.85**

(51) Int. Cl.⁴: **B 22 C 1/00,** C 04 B 35/14, C 03 B 19/06

(21) Application number: **82101336.4**

(22) Date of filing: **04.12.79**

(80) Publication number of the earlier application in accordance with Art. 76 EPC: **0 012 040**

(54) Extrudable compositions for making refractory cores for sandcasting of ferrous alloys.

(30) Priority: **04.12.78 US 966070**

(43) Date of publication of application:
**28.07.82 Bulletin 82/30**

(45) Publication of the grant of the patent:
**19.06.85 Bulletin 85/25**

(84) Designated Contracting States:
**BE CH DE FR GB IT SE**

(56) References cited:
**FR-A-2 336 998**
**FR-A-2 371 257**
**US-A-3 770 867**
**US-A-4 018 615**

(73) Proprietor: **SHERWOOD REFRACTORIES INC.**
**16601 Euclid Avenue**
**Cleveland, Ohio 44112 (US)**

(72) Inventor: **Larson, David Louis**
**151 Lakeview Lane**
**Chagrin Falls Ohio 44022 (US)**

(74) Representative: **Spencer, Graham Easdale et al**
**A.A. Thornton & Co Northumberland House**
**303-306, High Holborn**
**London WC1V 7LE (GB)**

EP 0 056 662 B1

Courier Press, Leamington Spa, England.

**0 056 662**

**Description**

The present invention is concerned with extrudable compositions suitable for making refractory cores for sandcasting of ferrous alloys, such as refractory cores of the type disclosed in our European Patent Application 79302780.6 (Publication No. 12040), from which the present application has been divided.

Extrudable silica-based compositions suitable for making precision investment cores have been used for a considerable time in the non-ferrous casting industry, but not for ferrous casting where rapid heating to 1500°C or higher is accompanied by a sudden gas expansion that will produce gas holes and other surface defects in the casting. If such a standard silica core were to be used in a sand mould for making an internal cavity in a steel casting, the surface of such cavity would be rough and irregular and would contain blow holes or similar defects, making the casting surface undesirable and making core removal more difficult.

FR—A—2336998 and its equivalent GB—A—1548759 describe extrudable silica-based compositions used for making refractory cores, which compositions comprise refractory particles, at least 80% by weight of which comprises vitreous silica, and a binder, with optional further ingredients, the composition further containing a mineralizer (which may be either present in the refractory particles or as a separate ingredient) in an amount such that cores made therefrom contain not less than 0.03% by weight (preferably at least 0.04% by weight) of devitrifying ions. Cores made from such compositions are intended for use in the directional solidification casting of non-ferrous superalloys, and they are pre-heated to convert generally at least 80% of the silica to cristobalite before they contact the molten metal. Such investment casting cores are completely unsuitable for use in ferrous foundries for the reasons explained above.

US—A—3770867 discloses extrudable silica-based compositions comprising silica particles, a plasticising organic binder and a tempering fluid. These compositions are for the production of refractory insulation tubes used to protect wiring, and also for making shrouds in the continuous casting of steel. The U.S. patent has considerable disclosure of particle sizes of the silica used in the composition; this disclosure is always in terms of at least 45% being greater than 65 mesh (210 micrometres).

We have now developed an extrudable composition suitable for making refractory cores used in sand casting of ferrous alloys, which composition comprises

(a) 100 parts by weight of refractory particles, at least 80 parts by weight of which comprises vitreous silica of which vitreous silica at least 20 parts by weight have a particle size of 1 to 30 micrometres, at least 40 parts by weight of the refractory particles having a particle size of 50 to 150 micrometres,

(b) 4 to 20 parts by weight of an organic binder, and

(c) a plasticiser and/or a tempering fluid in an amount sufficient to ensure that the composition is extrudable, the composition further containing a mineralizer, which may be present in said refractory particles or as a separate ingredient, in an amount sufficient to provide at least 0.04 parts by weight of devitrifying ions, wherein at least 20 parts by weight (of the 100 parts by weight of refractory particles) have a particle size of 1—30 micrometres and at least 40 parts by weight have a particle size of 50—150 micrometres. Thus the maximum amount of particles outside these ranges would be 40 parts by weight (contrary to the disclosure of US—A—3770867, in which as previously mentioned at least 45% have a particle size greater than 210 micrometres).

The compositions according to the invention are generally such that they can be extruded, dried and fired at at least 1000°C to form a refractory core containing crystalline silica formed in situ (generally in an amount of at least 15%, based on the weight of the core) and having a porosity of at least 25% by volume (such as 25 to 55% by volume) and a modulus of rupture of at least 60 bars at 1500°C.

The amount and size of the fine vitreous silica particles is selected to achieve the desired rate of devitrification of such particles in the bond region relative to that in the larger refractory grains during firing and also to provide the fired core with a high modulus of rupture at ambient temperature (e.g., a modulus of rupture of 100 to 150 bars at 25°C).

The modulus at room temperature may be determined by the standard method having ASTM designation C369—56 and the modulus at elevated temperature may be determined by a method having designation C583—67 or a substantially equivalent method.

The term "tempering fluid" is used herein to mean a liquid or fluid which provides the refractory mix with a consistency or plasticity suitable for extrusion. The term "plasticiser" or "plasticising medium" is used herein to mean a material which improves the plasticity or flow characteristics of the refractory mix and includes cereals, waxes, clays, and various organic materials which may also function as extrusion aids, lubricants, low-temperature binders, or fillers.

The plasticiser may be for example, of bentonite, ball clay or a cereal. The cereal can facilitate extrusion when the composition contains a tempering fluid, such as water. If clays are used, the maximum amount is preferably 5%, more preferably 3% or less, based on the weight of the refractory material, to limit the amount of aluminium compounds in the fired core and to facilitate leaching of the core. The total amount of organic binder or other organic material in the core composition is preferably no more than 25% and the amounts of plasticisers, fillers (if present) and inorganic binders (if present) are usually limited to a minor amount, such as 10% or less, based on the weight of the refractory particles in the mixture.

As indicated above, at least 40% by weight of the refractory particles have a particle size of 50 to 150 microns; it is preferred that at least 50% by weight (e.g. 50 to 70%) have a particle size of at least 40 micro-

2

metres, preferably up to 200 micrometres (particularly preferred being the range 50 to 150 micrometres).

As also indicated above, at least 20% by weight of the refractory particles have a particle size of 1 to 30 micrometres; 1 to 20 micrometres is preferred. It is further preferred that at least 30% by weight have a particle size of less than 30 microns, and that at least 10% by weight have a particle size of 1 to 10 micrometres. (The particles of size less than 30 micrometres in general function as high temperature binder.)

It is preferred that at least 40%, preferably the majority, of the refractory particles have a particle size not in excess of 100 micrometres.

The refractory particles contain at least 80% by weight of vitreous silica, up to, for example, 99%, and these larger silica grains preferably have high purity as defined below (for example, a purity of 99.7% or higher) to avoid loss of refractoriness due to impurities. Part of the silica may be of colloidal size and part may be mineralizer particles as described below.

The refractory grains are predominantly vitreous silica, but may contain minor amounts of other refractories, such as zircon or zirconia. Preferably at least 90% by weight of the refractory grains is silica, but zircon and zirconia can be tolerated in substantial amounts because they have less tendency to reduce refractoriness than alumina and other metal oxides. Generally, the resulting core should contain no more than 5%, preferably less than 2%, by weight of alumina, and no more than 10%, more preferably no more than 5% by weight of refractories other than silica, zircon and zirconia.

If the composition contains a small amount, such as 5 to 10% by weight of a refractory, other than silica, such refractory is preferably zircon but other refractories might be included in the core composition.

When it is desired to form a core containing a high percentage of silica, the core composition can contain silica-forming materials as well as the vitreous silica particles. Various silica-forming materials may be employed including liquid thermosetting phenyl lower alkyl siloxane resins of the general type disclosed in US—A—3,108,985 and 3,126,357. These are well known in the art and form silica upon heating above 1000°C.

The refractory core compositions according to the invention generally contain grains of high-purity fused silica and finer particles of fused silica containing a mineralizer. The term "grains" is used herein to mean refractory pieces with a substantial particle size no less than 40 micrometres. As applied to silica, the term "fused" is used herein to mean vitreous or amorphous and the term "high purity" is used to mean a purity of at least 99.5% by weight.

A typical high-purity vitreous silica would contain less than 100 parts (by weight) per million of alkali metals and less than 500 parts per million of alkali earth metals as natural impurities. Such vitreous silica is preferred in the present invention because it provides the resulting core with better refractoriness than can be obtained with a silica containing larger amounts of devitrifying ions.

The term "mineralizer" is well known in the ceramics art and refers to compounds which contain devitrifying ions (that is, ions which promote the conversion of vitreous silica to crystalline silica at a substantial rate), such as ions of alkali metals (for example, sodium or lithium) and/or alkaline earth metals, but excluding aluminium or metals less effective than aluminium in promoting conversion to the crystalline state. The mineralizer provides devitrifying ions in an amount at least 0.04% of the weight of the refractory particles (this percentage, and all subsequent references to percentages of ions and metal impurities, are based on the weight of the ion or metal and not on the weight of metal oxide).

In order to enable the cores to withstand the severe conditions encountered in the casting of steel and iron alloys (e.g. 1600°C and higher) it is necessary to maintain proper control over the ingredients used in the core composition and the particle size of the refractories and to control the amount of cristobalite formed during firing. Unwanted impurities, for example, can result in excessive devitrification and provide a core with inadequate thermal shock resistance. The fine silica used as the binder for the refractory grains need not have a high purity, but the amount of devitrifying ions should be kept within predetermined limits.

The mineralizer used in the present invention preferably provides, as devitrifying ions, alkali metal ions, such as potassium, sodium or lithium, or alkaline earth metal ions, such as barium, calcium or magnesium. Sodium ions are preferred because of their higher rate of diffusion. The mineralizer may be a salt, an oxide, a silicate, a nitrate, a borate or other compound of an alkali metal or alkaline earth metal (for example, sodium acetate, sodium chloride, sodium carbonate, sodium silicate, lithium silicate, potassium silicate or magnesium silicate) and it may also be another refractory (such as silica, zircon, zirconia or alumina) which contains a minor amount of devitrifying ions. When the mineralizer is an alkali metal silicate, it may be made in any suitable manner and may have an $SiO_2:M_2O$ mole ratio (in which M is an alkali metal) or from 1:2 to 4:1, for example, as disclosed in US—A—3,918,921.

The mineralizer is preferably relatively pure except that it contains devitrifying ions. A preferred amount of devitrifying ions is at least 0.1% more preferably at least 0.2%, based on the weight of the mineralizer. The percentage by weight of devitrifying ions in the mineralizer particles is preferably at least several times the percentage of such ions in the particles of high purity vitreous silica, such as up to one %, based on the weight of the mineralizer.

The core composition according to the invention preferably contains at least one % by weight, more preferably at least 2% by weight, of mineralizer particles, which preferably have an average particle size of not more than 30 micrometres, more preferably not more than 10 micrometres. For example, excellent results can be obtained where the refractory particles of the core composition comprise 80 to 98% by weight of the high purity vitreous silica and 2 to 20% by weight of refractory mineralizer particles containing at least 0.2% by weight of devitrifying ions.

A preferred mineralizer comprises treated particles of fused silica or other suitable refractory having a small particle size and containing devitrifying ions concentrated near the surfaces of the particles. Where the mineralizer is colloidal silica or a silica-producing material containing devitrifying ions, it is possible to produce a core containing more than 98% by weight of silica.

The preferred mineralizer particles are of fused silica or other suitable refractory particles treated with an alkali metal compound or alkaline earth metal compound to provide cristobalite-promoting devitrifying ions concentrated near the outer surfaces of the particles. Excellent mineralizers are the commercial sodium-stabilized colloidal silicas sold as a liquid suspension under the Trade Marks "Ludox", "Syton" or "Nalcoag". These commercial colloidal silicas have an average particle size substantially less than 30 millimicrons and a solids content of about 30 to 40% by weight, and contain a predetermined amount of sodium which is closely controlled by the manufacturer. A typical "Ludox" colloidal silica may, for example, have an average particle size of 14 to 17 millimicrons and an $SiO_2/Na_2O$ mole ratio of 90 to 95.

The amount of mineralizer employed in the composition depends on the type of mineralizer and on the amount of devitrifying ions lost by evaporation during firing of the core. If the mineralizer is a sodium silicate containing, for example, 20 or 30% by weight of sodium, then the amount thereof may be only 0.5 to 2% by weight. If the mineralizer comprises activating refractory particles, such as dried sodium-stabilized colloidal silica, a larger amount is preferred. Generally the mineralizer comprises 1 to 20% of the weight of the core.

The preferred amount of devitrifying ions in the core depends on the type of metal and is preferably at least 0.3% by weight. If the mineralizer provides sodium ions, the total amount of sodium in the fired core is preferably 0.04 to 0.1%, while if the mineralizer provides lithium or potassium ions then the preferred total amount of lithium or potassium in the fired core is 0.04 to 0.2%.

A preferred extrudable core composition according to this invention may, for example, contain 5 to 15 parts by weight of an organic low-temperature binder, 1 to 5 parts by weight of clay, 2 to 20 parts of a mineralizer and 2 to 5 parts by weight of a cereal per 100 parts by weight of refractory particles and may also contain other ingredients such as up to 5 parts of a conventional extrusion aid or up to 10 parts of a further plasticiser. The refractory core composition may also contain water, for example in an amount of 5 to 20% by weight.

As mentioned above, the composition contains an organic binder. Ethyl silicate binders are not appropriate. Sodium silicate is not suitable as a binder but can be used as a mineralizer. Suitable binders include linseed oil, low melting gums, waxes, polyterpenes, ethyl cellulose, shellac, polyethylene, polypropylene, polyvinyl acetate, and polystyrene.

An example of a suitable composition according to the invention is indicated below:

| Ingredient | Parts by Weight |
|---|---|
| Zircon (<74 microns) | 0—10 |
| Vitreous silica (total) | (90—100) |
| (a) 40 to 100 microns (particle size of silica) (average 60 to 70 microns) | 40—60 |
| (b) 10 to 40 microns | 20—40 |
| (c) below 10 microns (average 0.5 to 4 microns) | 10—30 |
| Colloidal silica (sodium content of 0.5 to 1%) | 1—7 |
| Clay | 2—5 |
| Cereal flour | 3—7 |
| Low-temperature organic binder | 0—5 |
| Further extrusion aid | 0—1 |

The dry ingredients can be mixed in a blender and thereafter mixed with water in a batch-type or continuous-type muller to provide an extrudable consistency. The water serves as a tempering fluid and may be added with sodium-stabilized colloidal silica (e.g., "Ludox"). The total amount of liquid in the resulting mix may, for example, be 15 to 30 volume % and is commonly 25 volume % or higher. The colloidal silica may have an average particle size from 10 to 20 millimicrons.

It is preferable to omit the zircon and to employ high-purity (<74 microns) vitreous silica in the core composition so that the fired core will have a silica content of 96 to 99% or higher.

The amount of sodium-containing colloidal silica is preferably sufficient to provide at least 600 parts by weight per million of sodium ions, and the total amount of sodium or other devitrifying metallic ions in the core is preferably 0.05 to 0.12% of the weight of the refractory particles or at least sufficient to permit formation of a fired core containing 15 to 30% by weight of cristobalite and having a high creep resistance at high temperature (e.g., a viscosity of 20 to 40 times $10^{11}$ poises or more at 1400°C).

The particle size of the vitreous silica used in the above recipe can, of course, be varied somewhat without seriously affecting the porosity and permeability of the fired core. Generally it is preferable to avoid particles with a size in excess of 100 microns but small amounts can be tolerated when forming cores by extrusion. A higher percentage of silica particles in the range of 50 to 100 microns or higher is desirable in improving the permeability of the core but cost considerations can result in use of commercially available silica which does not have an optimum particle size distribution (e.g., conventional <74 microns fused silica with major amounts of particles with a size less than 25 microns).

High quality cores may, for example, be made as indicated below using the following composition:

| Ingredient | Parts by Weight |
|---|---|
| Vitreous silica, 25 to 75 microns | 45 |
| Vitreous silica, up to 25 microns | 45 |
| Vitreous silica, 0.1 to 10 microns | 10—12 |
| Ball clay | 1.6—1.8 |
| Bentonite | 0.8—1.0 |
| Extrusion aid | 0—0.2 |
| Cereal flour | 5—6 |
| Sodium-stabilized colloidal silica (dry weight) (particle size below 0.05 micron) | 1.5—5 |

The silica, ball clay, bentonite, cereal flour and other dry ingredients may be blended in a conventional twin-cone blender and then placed in a conventional Simpson muller. Water and wet colloidal silica (e.g., "Ludox") may be added to provide a total liquid content of about 29 to 30% the materials then being thoroughly mixed to an extrudable consistency.

The mix may then be extruded as described in detail in the above-mentioned European Application.

The vitreous silica used in the above formulation may have a purity in excess of 99.7%. If desired, a common commercial as-ground fused silica may be used containing a substantial proportion of fines with a particle size from 0.1 to 20 microns, such as a conventional <74 micron vitreous silica. Ninety parts of the latter (for example, Glasrock P1W silica) may be mixed with about ten parts by weight of fine silica having a particle size of 0.1 to 10 microns in the above formulation.

The same commercial <74 micron silica containing up to 50% by weight of particles below 25 micron size can be subjected to air separation to separate out the fines when it is desired to improve the permeability of the core. However, the core composition does require at least 20% by weight of fine silica to serve as the high temperature binder for the refractory grains.

## Claims

1. An extrudable composition for making refractory cores which comprises
(a) 100 parts by weight of refractory particles, at least 80 parts by weight of which comprises vitreous silica,
(b) 4 to 20 parts by weight of an organic binder, and
(c) a plasticizer and/or a tempering fluid in an amount sufficient to ensure that the composition is extrudable, the composition further containing a mineralizer, which may be present in said refractory particles or as a separate ingredient, in an amount sufficient to provide at least 0.04 parts by weight of devitrifying ions, characterised in that at least 20 parts by weight of the refractory particles have a particle size of 1 to 30 micrometres and at least 40 parts by weight of the refractory particles have a particle size of 50 to 150 micrometres, such that refractory cores made therefrom are suitable for use in sand casting of ferrous alloys.

2. A composition according to claim 1, characterised in that the plasticiser comprises a clay, in an amount of 1 to 5 parts by weight, and/or a cereal, in an amount of 2 to 5 parts by weight.

3. A composition according to claim 1 or 2, characterised in that the tempering fluid comprises water, in amount of 5 to 20 parts by weight.

## Patentansprüche

1. Extrudierbare Masse zur Herstellung von feuerfesten Kernen aus

(a) 100 Gewichtsteilen feuerfestem Material, von dem zumindest 80 Gewichtsteile glasige Kieselsäure sind,

(b) 4 bis 20 Gewichtsteile organisches Bindemittel,

(c) einem Plastifiziermittel und/oder eine Anmach-Flüssigkeit in ausreichender Menge, daß die Masse extrudierbar wird, sowie zusätzlich einem Mineralisator, der in dem feuerfesten Material oder als Zusatz vorliegen kann, in ausreichender Menge, daß zumindest 0,04 Gewichtsteile entglasende Ionen vorhanden sind,

dadurch gekennzeichnet, daß zumindest 20 Gewichtsteile des feuerfesten Materials eine Korngröße von 1 bis 30 µm und zumindest 40 Gewichtsteile von 50 bis 150 µm besitzen, so daß sich die daraus hergestellten feuerfesten Kerne für den Sandguß von Eisenlegierungen eignen.

2. Masse nach Anspruch 1, dadurch gekennzeichnet, daß als Plastifiziermittel 1 bis 5 Gewichtsteile Ton und/oder 2 bis 5 Gew.-% Getreide enthalten sind.

3. Masse nach Anspruch 1 oder 2, dadurch gekennzeichnet, daß die Anmachflüssigkeit 5 bis 20 Gewichtsteile Wasser ist.

## Revendications

1. Composition extrudable pour la fabrication de noyaux réfractaires, qui comprend:

(a) 100 parties en poids de particules réfractaires dont au moins 80 parties en poids sont composées par de la silice vitreuse,

(b) 4 à 20 parties en poids d'un liant organique, et

(c) un plastifiant et/ou un fluide de trempe en une quantité suffisante pour que la composition soit extrudable, la composition contenant de plus un agent minéralisateur qui peut être présent dans ces particules réfractaires ou en tant qu'ingrédient distinct, en une quantité suffisante pour fournir au moins 0,04 partie en poids d'ions dévitrifiants, caractérisée en ce qu'au moins 20 parties en poids des particules réfractaires ont une dimension particulaire de 1 à 30 microns et qu'au moins 40 parties en poids des particules réfractaires ont une dimension particulaire de 50 à 150 microns, de telle sorte que des noyaux réfractaires fabriqués à partir de cette composition conviennent pour être utilisés dans la coulée des alliages de fer en moules de sable.

2. Composition suivant la revendication 1, caractérisée en ce que le plastifiant comprend une argile, en une quantité de 1 à 5 parties en poids, et/ou une céréale en une quantité de 2 à 5 parties en poids.

3. Composition selon la revendication 1 ou 2, caractérisée en ce que le fluide de trempe comprend de l'eau, en une quantité de 5 à 20 parties en poids.